# EUROPEAN PATENT SPECIFICATION

(11) **EP 2 948 906 B1**
(45) Date of publication and mention of the grant of the patent: **09.01.2019**
(21) Application number: 14703905.1
(22) Date of filing: 28.01.2014
(51) Int. Cl.: G06Q 10/02, H02J 7/00, G07F 15/00

(54) **POWER DISTRIBUTION SYSTEM**
STROMVERSORGUNGSSYSTEM
SYSTÈME DE DISTRIBUTION ÉLECTRIQUE

(30) Priority: 28.01.2013 GB 201301479
(43) Date of publication of application: 02.12.2015
(73) Proprietor: BuffaloGrid Ltd., Office 2 Liverpool Merseyside L1 0BP (GB)
(72) Inventor: BECERRA, Daniel, Stratford London E15 2GW (GB); MILLAR, Damon Paul, Stratford London E15 2GW (GB); DZISIEWSKI-SMITH, Stefan Drummond, Stratford London E15 2GW (GB)
(74) Representative: HGF Limited
(86) International application number: PCT/GB2014/050221
(87) International publication number: WO 2014/114959

(56) References cited:
- DE-A1-102010 062 698
- JP-A- 2003 348 757
- US-A1- 2004 066 169
- US-A1- 2005 245 127
- US-A1- 2010 174 642
- US-A1- 2011 258 251
- Gude: "User Manual Expert Power Control 8090 GSM", , 31 December 2016 (2016-12-31), XP055474068, Retrieved from the Internet: URL:https://www.gude.info/fileadmin/user_u pload/products/pdu/8090/manual-epc8090.pdf [retrieved on 2018-05-09]
- Anonymous: "MAXBERT s.c. - Listwy zarzadzalne", , 19 August 2012 (2012-08-19), XP055475273, Retrieved from the Internet: URL:https://web.archive.org/web/2012081908 2547/http://www.maxbert.pl/Listwy_Gude_EPC 8xGSM.html [retrieved on 2018-05-15]

## Description

This invention relates to a power distribution system.

### BACKGROUND

Currently large areas of the developing world have access to the mobile telephone network but not to electrical power and are off the electricity grid. In the case of Uganda, 90% of the population have mobile network coverage, but only 4% have access to their own source of electrical power. This invention addresses the problem of providing power to rural areas where the capital costs and/ or pay per use is prohibitively high for the local population. For example, mobile phone charging is currently too expensive for the developing world; solar cells have prohibitive capital costs, and the price point of pay-per-charge means that phones are not often charged for long periods, which limits their use. For people wanting to charge their phones in rural off grid locations the following problems exist:
- a fee is often charged which is relatively high or even prohibitive, based on the local economy;
- users have to travel a long way to find power distribution, requiring considerable amounts of time;
- free power is difficult to access, often unsanctioned and therefore limited or unreliable;
- users have to wait with their phone whilst it charges, typically 90mins.

In rural Africa to find a free charge users must travel relatively long distances, and access to power when they arrive is not always guaranteed. Alternatively, they are required to leave their phone with a local charge station that has some kind of power generation and charges a fee. People recharging their phones do not want to pay for the service. They avoid this by going without, or waiting until they can travel somewhere where there is a free charge.

However at present the cost for charging a phone is many times the cost of the power, typically 50 cents, this is because:
- it is difficult to fully utilise a solar cell, which will often sit unused for long periods of time;
- an attendant is needed to administer sharing; the attendant's time is more costly than the power, unless they attend many solar cells; and
- alternative sources of power (e.g. diesel or kerosene) cost much more than solar per charge, but charge shops use diesel because people have heard bad stories about the reliability of renewable power, and because diesel generators have lower set up costs when charging multiple devices.

The present invention, at least in its preferred embodiments, seeks to address the above problems. US 2004/066169 discloses a system and method suited for the recharging of portable devices. DE 10 2010 062698 discloses a photovoltaic module and a method to control a photovoltaic module. JP 2003-348757 discloses a charging service system and charge service method. US 2011/258251 discloses systems, methods and devices for providing power to recharge portable electronic devices. An "Expert Power Control 8090 GSM" is a switchable power distribution unit, that can switch remotely other devices in the power grid.

### BRIEF SUMMARY OF THE DISCLOSURE

The present invention provides a portable power distribution unit for distributing electrical power to battery-powered electrical devices, in particular mobile telephones in off-grid communities, as defined by the appended claims 1-9.

Thus, the invention provides a unit by which mobile phones (or other devices) can be charged under the control of a remote server. In this way a commercial framework can be provided by which off-grid communities can charge their mobile phones in a simple and efficient manner.

The unit may further comprise a current monitor configured to monitor the current supplied to an electrical device via the power connector. In this way, the locking mechanism, for example, can monitor to the current drawn from the power source in order to ensure that the system is being used legitimately. The locking system may communicate current usage information to the server.

The locking mechanism may be configured to disconnect the power connector from the source of electrical power in response to a signal from the current monitor indicative of the connection of a further electrical device to the power connector. In this way, "slipstreaming" of additional electrical devices when payment has only been made for one device.

The locking mechanism may be configured to disconnect the power connector from the source of electrical power after a predetermined amount of charge has been provided to the electrical device.

The remote server may be configured to receive a request from the user indicating the user's requirement for battery charging and in response to the received request to obtain payment in respect of the battery charging and on confirmation of payment to send the authorisation signal to the locking mechanism.

The server may be configured to obtain payment, at least partially, from a third party other than the user. The third party may be a mobile network operator providing a mobile network service to the user.

The request to the server may be in the form of an SMS message to a predetermined telephone number. The request may be in the form of an unanswered call to a predetermined telephone number. The request may be in the form of a mobile money transfer. The predetermined telephone number selected by the user may indicate to the server the particular locking mechanism to which the authorisation signal is to be sent. The content of a message may indicate to the server the particular locking mechanism to which the authorisation signal is to be sent.

The power source may comprise a solar panel. Alternatively other power sources may be used. The power source comprises a battery, for example charged by the solar panel.

The power connector is a USB connector.

A power distribution system for distributing electrical power to battery-powered electrical devices is presented. Each electrical device is associated with a respective user and each user is a participant in a service (other than the charging of electrical devices) provided by a service provider. The system comprises a source of electrical power connectable to the electrical device of the user, whereby to replenish the battery of that device in response to a requirement from the user for battery charging. The system further comprises an authentication mechanism configured to determine whether the user of the electrical device connected to the power source is a participant in said service, and a payment mechanism for requesting payment from the service provider in respect of the power supplied to electrical devices of users who are participants in said service.

Thus, in accordance with the invention, electrical devices can be charged by authorised users of a third party service and payment for the charging is requested from the third party service provider.

Typically, the electrical device is a mobile telephone. However, embodiments of the invention are envisaged in which the electrical device is a computer or another tool, such as a sewing machine. The service provider may be a mobile network operator and the service may be the provision of mobile telecommunications to the mobile telephone. Alternatively, for example, the service provider may be an employer and the service may be manufacturing of goods or the service provider may be a healthcare organisation and the service may be the receipt of healthcare information.

The power source may comprise a solar panel, a generator, mains electricity, a fuel cell or any other suitable source of power.

The power source comprises a battery.

The authentication mechanism may comprise a vendor providing the power to the user. Thus, the vendor may supervise the charging of the electrical device to ensure that electrical device is associated with an authorised user of the service.

The authentication mechanism may involve the user purchasing from the vendor a credit for continued participation in the service. The credit may be a pre-paid voucher. In this way, the vendor is able to identify authorised users of the service because they purchase service credits from him/her. Consequently, the vendor will allow access to the power source to such authorised participants.

The authentication mechanism may include a mechanism for comparing the volume of usage of the service by the user to the electrical power (to be) supplied to the user's electrical device. For example, a vendor or an automated access control system may monitor the user's usage of the service and provide access to the power source in response to a predetermined level of usage or predicted future usage. Thus, the volume of usage may be a potential future volume of usage. The potential future volume of usage may be determined on the basis of an amount of credit purchased by the user.

The system comprises a locking mechanism arranged to prevent unauthorised charging of electrical devices from the power source. The locking mechanism may be configured to receive an access code and in response to receipt of a valid access code to allow charging of an electrical device. The locking mechanism is configured to receive the access code via a mobile telecommunications network.

The access code may be generated in response to a communication from the user. The communication from the user may be made by means of the electrical device. The communication from the user may be a message, in particular an SMS message, sent to the authentication mechanism. The access code may be generated by the authentication mechanism. The access code is sent to the locking mechanism via a mobile telecommunications network. The access code may include data identifying the user's electrical device.

The locking mechanism may be configured to identify the electrical device connected to the power source. For example, the locking mechanism may be configured to interrogate the electrical device via the electrical connection between the electrical device and the power source.

The electrical connection between the power source and the electrical device is a USB connection.

### BRIEF DESCRIPTION OF THE DRAWINGS

Embodiments are further described hereinafter with reference to the accompanying drawings, in which:
Figures 1-7 are schematic diagrams of systems that provide power to off-grid communities; and
Figure 8 is a schematic circuit diagram of a charging unit according to an embodiment of the invention.

### DETAILED DESCRIPTION

The present invention provides a system that provides power to off-grid communities, i.e. communities that are not connected to mains electricity. In broad terms, an embodiment of the invention provides a hub unit that dispenses electrical charge to users. The users simply walk up to the hub and send a phone message to the telephone number on the hub. The phone message provides payment for a charge and activates a charge port on the hub, where the phone (or other device, such as a light) can be plugged in to charge.

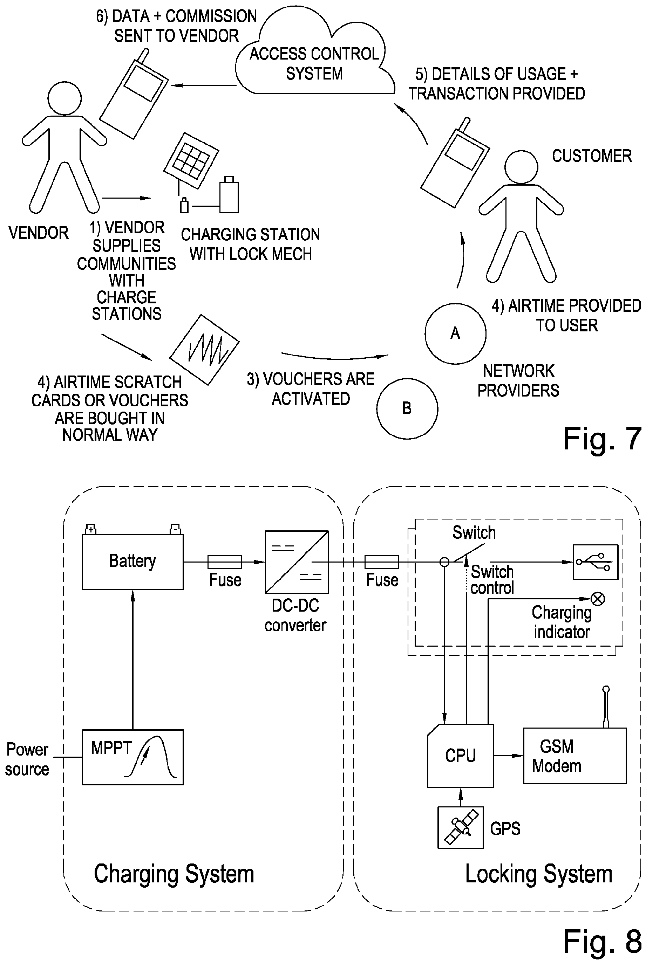

In a typical example of use, a "hub" charging unit, shown schematically in Figure 8, is located in a shop and provides charges to customers. The shopkeeper may sign up to the power distribution as an agent who supervises a hub; the agent then receives a share of the fee paid by the customer. A customer goes to a shop to charge a device. The device may be a mobile phone, rechargeable light, or other device that can be charged from a low voltage, e.g. 5V, source. The customer must have a mobile phone in order to pay for and activate the charging service. The customer looks at the hub to see a label with a phone number, and sends an SMS to the number on the label, which pays for the charge. In response, the hub automatically activates a charging port, and illuminates an indicator

The hubs are administered by a person, referred to as the "agent". The agent has responsibility for the hub's security and for helping customers use it. Agents are provided with a hub unit free of charge, and are paid directly by the power distribution service provider. The agents are not paid by the customer. Agents are chosen based on their position as trusted members of a community, ensuring that absconding with a hub unit is not worthwhile.

Each hub is in data communication with a server of the power distribution service provider. The server receives the message that a user sends, and processes the message for payment. If the payment is successful, the server sends an authorisation message to the hub to instruct the hub unit to enable a charge port, so that charging can begin. Some of the revenue from that charge sale is paid to the agent, and some is retained by the power distribution provider.

The hub comprises two systems: a charging system that accumulates power in a battery; and a locking system that only makes this power available in response to payment. The charging system comprises a power source, a charge controller, a battery and a DC-DC converter. The charging system takes power from the power source, conditions it for maximum power transfer and uses this to charge a storage component, in this example a battery. This stored power is then used to provide regulated power, via a high efficiency DC-DC converter that converts the battery voltage down to the appropriate voltage for USB charging. The input power source can be any source capable of producing low voltage DC, for example a generator, solar cell, fuel cell, mains powered DC power supply or other similar supply.

The presently preferred power source is solar. Solar power is generated using a solar panel that is connected by a wire to the hub unit. The solar panel size is selected to provide sufficient power to serve peak expected hub use at the time of year with lowest sun energy (typically winter). Other power sources besides solar power are possible (e.g. wind power).

The charging system comprises a maximum power-point tracking system, which maximises power transfer from the source to handle battery charging profiles. The tracking system controls the charging system's voltage and current to optimise the power transfer from the solar panel to the battery by locating the point on the VI curve that provides the most efficient solar cell performance. The charging system also actively protects the health of the battery. Some battery types suffer reduced life when discharged deeply, charged too quickly or when charged at extreme temperatures. The charging system moderates charge and discharge to maintain the battery within the safe operating window. The charging system communicates with the locking system.

The locking system comprises an array of charging ports, a controller, a GSM (or other mobile telecommunications) modem and optionally a global positioning system receiver (GPS).

The array of ports allows USB devices to be connected for charging. Each charge port comprises a USB connector, controlled switch, indicator, current readback circuit and resettable fuse. If a user's request for charge has been accepted, a charge port is enabled, causing the switch to apply power to a specific port, and an indicator is illuminated to advise the user which port has been allocated for their use. If a port is not enabled, then the switch provides no power to it. While a port is enabled, the current being supplied to that port is monitored. This current monitoring may be used as a safety measure to disable the port if too much power is being drawn, as a payment regulation system to ensure that users who consume more power pay more (e.g. user makes a second payment to complete the charge), as a means of identifying when a device has finished charging so it is clear that the device can be removed, and to enforce a time limit to ensure faulty devices do not occupy charge ports for too long. One of the charge port switches may be set to always be on, to enable users with no charge to obtain enough charge to send a payment message. This "always on" port may be limited in charge time or current, to prevent misuse as a full charge port.

The controller of the charging system controls the ports in response to commands received via the modem. From the server, the controller receives instructions via the GSM modem to control the charge ports. In a typical transaction, the server sends a GSM instruction to the controller to enable a charge port, and the controller will select one of the vacant ports to enable. While charging is in progress, the controller monitors time and charge current, to determine when charging is complete (the controller includes hardware for timekeeping of both system time and charge time). Once the charge is complete or the paid allocation of time or current has run out, the controller closes the charge port.

The controller is also used to check for misuse by exchanging messages with the server to ensure that payment has been made. Checks may be performed to ensure the instruction arrived from a legitimate server, using techniques such as cryptographic signatures or challenge/response. The controller also checks for misuse during charging, by monitoring the charge current to see if a second device is attached the port during or after the first phone. The controller may check for mis-handling at all times, looking for large impacts to the hub or power spikes. It also checks for attempted dismantling of the hub. The controller can be used to activate parts of the system that might otherwise be stolen: these parts may have activation circuits built into them to ensure they will not work when separated from the system. The controller provides lock-down functionality that allows the system to be unlocked in response to a server message, so that a stolen or misused hub may be prevented from operating.

The GSM modem allows the controller to communicate with the server. For example, when a user pays for a charge, the server sends a message to the hub's modem, instructing it to open a charge port. The hub periodically sends status information to the server via the modem. These instructions may be sent as GSM messages (e.g. SMS text messages) or as data. In future iterations of the hub, the GSM modem may be used for providing internet access to users. Hubs may use GSM modems for communication to and from the server, but other modem types (e.g. satellite) for providing internet access to users.

The controller may use the GPS receiver to restrict operation of the system within a specified territory or geolocation. Geo-fencing may be used to give exclusive use of the system within an area. The GPS system can also be used to aid with deployment and recover stolen hubs, allowing the hub to send messages to the server that advise its location. The GPS may be used for accurate timing data, to ensure events and transactions share a globally accurate timebase.

There are some circumstances in which the charging system may be abused. In one potential method of abuse, a device may be connected immediately after the prior device becomes fully charged (a practice called "slipstreaming"). The system protects against this by monitoring the drawn current, and terminating a charge if the current increases (as would be seen if a flatter device was connected).

In another potential method of abuse, several devices are connected to the same charge port (e.g. using a splitter cable). The system protects against this by logging the current drawn in previous charges, and comparing that to the present current draw. The maximum current is also limited, unless the characteristics of the device seen at the other end of the USB charge cable identify it as a single high-drain device.

In another potential method of abuse, a person may pay for charge with one phone, but use that charge on another phone or device. (This method is only important when a discounted charge is offered, because full-priced charges all make the same profit). To protect against this, the server counts the subsidised charges vended per number, and limits each phone number to a certain number of charges per week.

In another method of abuse, a person may keep a SIM card or phone number with the intention of only using it for obtaining subsidised charge, not for making calls. To prevent against this, the system can query network operators about whether the use of a specific phone number has been high enough to make it eligible for subsidised charge.

In another potential method of abuse, users may charge a large battery instead of a phone, allowing them to subsequently receive multiple phone charges for the price of one. To prevent against this (while still allowing batteries to be used, because they are useful), the system monitors the current draw, and will conclude a charge after one phone's worth of power has been supplied, regardless of whether the phone is fully charged. If the user wishes to complete the charge, they may pay a second time. Alternatively, if the payment system supports flexible payment rates for a message, the user may be charged by current drawn.

The hub is also protected against deliberate misuse by agents. The hub will not provide power unless it has been instructed to do so by the server, in response to a payment. It protects against the agent trying to sell charges for cash by shutting off ports that have been used already to charge a phone, whether partially or fully. The solar panel will not function unless it too receives instruction from the hub. The only way that a port can be opened on the hub is in response to a command from the server, and the only way to achieve this is for the server to have received an authorised payment.

Since each message to and from the server is encrypted with a unique and secret cryptographic key, the server cannot be faked. If an unauthorised user attempts to use the hub, their attempts will fail due to the combined effect of several fraud prevention methods. Firstly, if the unit is moved from its authorised location or suffers an attempted breakdown, the unit will disable all of its elements rendering it useless. If any attacker attempts to fake the messages to and from the server, this will fail as they will not have the correct cryptographic key with which to encrypt these messages

People who run hubs (agents) may be allocated a territory over which they can use them, or have exclusive rights to a territory, to prevent altercations between agents. To enforce these territories, hubs may use location sensors (e.g. GPS or mobile tower triangulation) to restrict their operation to certain geographical areas. If an agent attempts to use a hub outside their allocated area, it will refuse to work.

The server is responsible for the following tasks: connections, i.e. methods of connecting to the outside world; processes, i.e. autonomous algorithms that initiate activities; systems, i.e reactive algorithms that handle specific tasks; and accounts, i.e. stored information on users and the like. The server system components need not be located at the same place, for example they may be distributed around the internet or provided as a service.

The server comprises a GSM modem which receives messages and payment from users' phones. The messages from users' phones contain the payment, the identity of the hub to charge at, and the message meta-data also contains the sender's phone number and network. The GSM modem may be used for sending confirmation messages to users, balance messages to operators and messages to supervisors using text messages or other GSM methods such as USSD. The GSM modem is also used to communicate with the hubs, providing commands to enable charging ports, and receiving status or error messages from them. The server has an internet connection which is used for administration of the server. If the server system is distributed, the internet connection also transfers data between parts of the server system. The internet connection may be used to communicate with the hubs, instead of using the GSM modem.

A customer handling process handles transactions and the process of a customer requesting a charge. This process begins with a payment message that includes an identification of the hub to charge at. The process continues with the application of any discount, then a message to the hub instructing it to open a charge port, and to monitor the charge process. Finally the hub may inform the server that charging is complete, concluding the charge process. Throughout the charge process, any errors or problems may be logged against a user and hub accounts.

When more than one charging service is available, payment by message must also include a specification of which charging service is being paid for. The may be done by varying the content of the message, or the destination of the message (telephone number). When a payment system allows varying prices to be billed for a message, the specification of the charging service to be purchased may be made in the message's text body (e.g. a user may send payment to a phone number, but the cost of that message will depend on the content of the message). When a payment system enforces a single price for all messages, multiple messages may be used to make a payment. Charging prices may be listed in multiples of a message cost. Alternatively, multiple message destination numbers may be used, which have different costs. The last digits of the destination number may be used to indicate the charging service to be paid for. The content of the message may identify the hub. Another possibility is that each price point may have a different message destination number, so that all items that cost the same amount, have payment messages sent to the same number (e.g. message destination 010 = 10 cents, message destination 020 = 20 cents) . In this case, the content of the message identifies both the device that will dispense the charge, and the charging service to be purchased.

A customer may wish to continuously power a device (e.g. a radio), rather than charge. They would like to be able to do this without periodic interruption e.g. when a time or power usage limit is reached. Continuous power may be provided in several ways. In one possible method, a user may send multiple payment messages. If these payments were made from the same phone, the hub may interpret them as payments for the same port and queue them up, so the second payment begins immediately after the first is complete. Alternatively, the payment message may contain additional information indicating that the payment is to be queued (e.g. the word "queue" or number of the port to be activated). Alternatively the user may be warned shortly before a limit is reached, prompting them to make another payment to ensure continuous provision of power.

In another possible method, an alternative more expensive payment method may be offered, which provides a larger limit of power or a longer period. The alternative payment may instead allow purchase of a fixed period of continuous power, provided power draw is within a limit, ensuring the user will obtain power for the duration that it is needed. The alternative payment method may support continuous billing, in which the user's payment provider allows repeated billing in response to a single message, or allows a "begin" and "end" message to be sent.

A hub monitoring process checks the status of all hubs in the system. The hub-monitoring process responds to alerts from the hub and schedules maintenance or repairs, addressing these alerts to the appropriate target. The hub monitoring process responds to messages from users who are requesting the status of the last hub they used, so they can know whether it is worth travelling to the charge location. The server may reply to status request messages, describing how many ports are free, what charge is predicted to be available, and whether the hub is in its usual location.

An employee handling process presents a cohesive system for handling everything to do with employees. It coordinates communications with employees about wages, statements, complaints and supervision. It also handles employment for agents and managers who begin or end working with the power distribution provider.

A payment system provides authorisation for the server to obtain money to pay for a charge. This payment system may be used to access many different payment methods including: premium rate SMS, i.e. text messages that cost more than normal; mobile banking, i.e. bank accounts accessible by sending a number from a mobile phone; direct operator billing, i.e. payment by means of airtime; evidence from another source that payment has been made (e.g. a missed-call from the agent, an SMS with the voucher number etc); free charge, which may be provided for certain users or all users

All types of payment method allow the power distribution provider to obtain proof of small payments, prior to opening a charge port. This proof may involve connecting to a payment provider, who authenticates a payment. The payment system also allows for refunds in certain circumstances (e.g. when a customer's phone fails to charge). The payment system pays any local taxes due, and updates the power distribution provider's accounts.

In many places, airtime credit may be transferred between people on a network. The ability to easily transfer airtime credit makes it simpler to handle than hard currency or mobile money. One issue with using airtime to make automated payments is that no message accompanies the transfer of credit, so it can be difficult to specify a charging service to be paid for and the hub that will dispense it. The present system uses two methods to identify hubs and charging services: unique destination number, whereby a unique number is provided to send airtime which identifies the hub unit; unique price, whereby each product or service carries a unique price, so that the price can be used to indicate which product the user wishes to purchase. Another issue with airtime payments is that the transaction is one way: the present power distribution sells charge, and is paid in airtime credit, ending up with a glut of airtime credit. To resolve this issue, agents may be allowed to re-sell credit, provided to them at a discount.

A manager system provides a way for local managers to monitor the agents and hubs that they are responsible for. It contains tools for monitoring performance and reporting problems, and confirming that those problems have been solved. It organises regular check-ups with managers and agents, scheduling and alerting them. It also organises repairs and parts for hubs. The manager system allows local managers to keep track of the progress of agents that they supervise. The manager system will typically be presented as a tabulated report, highlighting agents who are performing exceptionally well and badly. This tabulated report may be sent via SMS, or (if available) via web or email. The manager system may also include alerts, which are messages that require timely action. Alerts may indicate to managers a problem with a hub, an agent or a client that needs action from them to solve. All alerts contain a way for a manager to confirm they have taken an action, and a visible measure of success at which the alerts will be considered solved. The manager system confirms that hubs have been attended by a manager, by using prompt and response. In one example, when a manager attends a hub, the server instructs the hub's indicators to display a pattern that the manager must tell the server, confirming that the device has been attended. In another example, the server instructs the hub's speaker to make a specific sound. The manager is expected to make a phone call, and the server will confirm that it is hearing the correct sound.

An administration system allows the server system to be maintained, and the power distribution provider's performance to be measured. Some examples of system maintenance include setting up new regions, upgrading server components and backing up or restoring server data. Performance measurement may involve a report being made available for managers of the system, to show which regions and managers are performing well or poorly, or where the system is having errors. Performance measurement may also be important for the power distribution provider's accounts and for regulators in the regions in which the power distribution operates.

User accounts keep track of each customer using the power distribution system. The customer is not aware of the use of accounts; the system appears to be the same for a new user as for a regular user. The user account is used to record misuse, to cache details of an account for faster retrieval, and to collect information on system usage. A customer account may have information such as:
- phone number - the user's mobile phone number. Each user account is tied to one phone number.
- status - in good standing or banned from the system
- phone network - which mobile network the user belongs to
- history - dates and location of charging
- charge time - how long a charge normally takes for their phone
- irregularities - whether it appears that the account is being misused

Agent accounts are provided for each agent running a hub. They keep track of the system's performance and make the agent's share of revenue available as a payment. A hub status keeps track of the status of each hub. It may track immediate status attributes such as usage, and longer term attributes such as service record and utilization. Manager accounts are provided for each manager, who manages a collection of agents and performance and activity are logged to these accounts. Promotions accounts are provided for each promotion. Information includes promotion criteria and performance of the promotion, including balance remaining in the promotion and statistics about which users participated.

A promotion system allows selected groups of users to receive cheaper charges of their devices. A company that wishes to use the power distribution provider for promoting their service defines a group of users (e.g. users of one network, or users in one location) and applies a level of subsidy to them. Additional rules may also be applied (e.g. only one discounted charge per user). Promoters have access to reports that monitor the application of their promotion and an account to see how much of their promotional budget has been used. Promotions may alternatively be organised in a "request" fashion, where the server queries a promoter for every user, to see if a promotion is to be applied.

Promoters, such as mobile network operators, can reward people in their networks with cheaper mobile phone charges. Customers who change networks to enjoy cheaper charging are measurable because each charge is paid for by message, which captures the phone number to be charged. Network operators can see which new customers join their network due to charge, and check how much more airtime customers who use charge are buying.

For mobile network operators, the present power distribution is more attractive than traditional promotional activities, as such as billboards and point of sale posters, because they get two benefits: more users and more spend per user. A mobile network operator wants to ensure their customers have a charged phone so that they can continue making calls, sending messages, etc, which in turn generates 'airtime' revenue for the operator. In some cases, a promotion that subsidises charging may pay for itself, because off-grid villagers spend 15% more on airtime, when power is available (GSMA).

Promotion is not just for network providers; other groups or companies (e.g. clubs) may compile a list of phone numbers that will receive cheaper promotional charging. For example, a company may choose to subsidise its employee's phones by 100% of the charge cost, allowing them to freely charge their phones anywhere a hub is found. Subsidising charge ensures that group members always have power in their phones so it may improve productivity, and provides a reason to continue to belong to a group improving loyalty.

By reading the sender's phone number from a payment text message, it is possible to determine which phone number sent a payment, and what phone network they are using. Knowing which network operator is being used allows a different (lower) tariff to be charged to customers on that network, creating a system that provides incentive to use a network with cheaper charging.

The system may also be applied to customers who register their number for a service, or any other promotional service that is able to collate a list of phone numbers who are members of that service, such that these numbers can be matched to the sender of the payment text. Alternatively, a gateway service may be provided to a holder of this list of numbers, allowing the payment server to query the gateway service on receipt of each payment message, to see whether a discount is applicable.

The differential power distribution payment rate may be provided either using a single destination number that all payments are sent to, and payment taken varies, or (for example in cases where cost charged due to a message is fixed and may not be varied by vendor) a range of payment numbers are provided, and the sender's number is used to verify that the user is eligible to pay the rate that corresponds the payment number (e.g. a sponsoring network's users may send their payment to a different payment number, that charges a lower rate, but checks the sender's phone number, so that payment messages sent to this number will not be accepted unless the sender is entitled to a discounted charge).

It may not be sufficient to look at a phone number to deduce which network a phone is on: some phone numbers may have been moved to a new network, while keeping the same number. To accommodate this, the system may use the Hardware Lookup Register (HLR) service to determine the "home" mobile network that a phone belongs to.

Promotions are not restricted to network operators. A company or organisation may provide a service to local peoples and be willing to sponsor the power required to consume that service. For example, a health organisation may want to distribute an educational message, by paying for users to charge their devices while watching that message. It typically takes at least 90 minutes to charge a phone, which means that customers at charge stations must wait for their phones to charge. The hub may be fitted with a speaker or screen that plays advertisements to people who are waiting for phones to charge. These advertisements may be interactive or provide educational, or internet access. By equipping a hub with a radio or screen, it may be possible for people to use the hub's payment method to purchase viewing time. For example a user may message the hub to turn on a radio broadcast for an hour.

Many off-grid people must walk long distances to charge their phones. If they find that charge is sometimes unavailable when they arrive (e.g. due to poor sunlight or because the vendor has moved the unit) then they will be unlikely to continue using the power distribution. The present system supports a remote request for charge level and availability, so that customers can tell before they leave home whether charge will be available. A user simply sends a message to the hub charge check number, and receives a reply stating whether the unit is on and error-free, whether the unit is in the location the user last charged at (the charge assessment system works by remembering the last location that a charge was vended to each phone number and correlates this to the location from the GPS module of the hub), how many charge slots are unoccupied, how much charge is remaining in the hub's battery, the likely time the unit will stop accepting new phones - based on past patterns of behaviour (e.g. when does this vendor normally shut down) and present rate of use (e.g. how many phones are charging and how much power is left).

Customers may arrive at the hub with no power in their phones, making it impossible to send a message to pay for charge. To solve this problem, the hub comprises a crippled "always-on port" that provides a limited amount of power all the time. The always-on port provides enough power to power-on a phone with a flat battery and send a payment message, but is limited so that it would be impractical to charge a phone completely on this port. There are several methods in which the "always on" port may be limited:
- current limiting - enough current is supplied to power on a phone, but not enough to charge its battery;
- cumulative charge limiting - the charge dispensed may be measured until it reaches a limit;
- time limiting - the port may be enabled for a defined period after a device is connected;
- interrupted - the port may provide a periodically interrupted power supply;
- gated - the port may need to be activated by the agent (e.g. using a button).

The number of activations of the always-on port each day is communicated to server in order to monitor abuse.

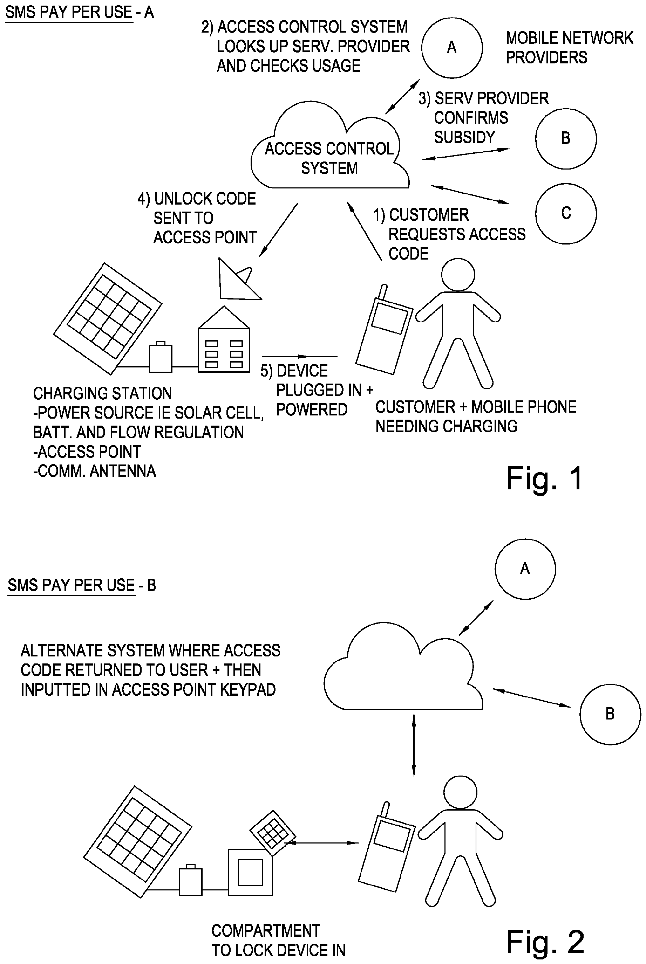

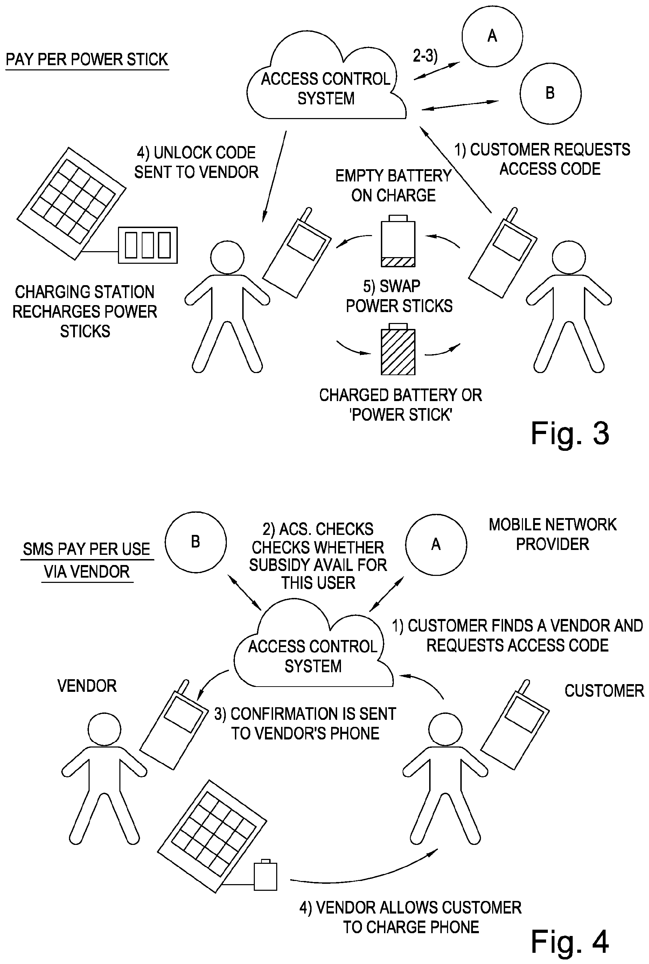

Further systems are described in the following with reference to Figures 1 to 8. The systems shown in Figures 2 to 7 are outside the scope of the invention as defined in the claims.

The present inventors have identified the following "rules" as critical to ensure successful adoption of a service or product for distributing electrical power to mobile telephones in rural communities:
Rule 1 - Most people really don't want to pay for charging their phones;
Rule 2 - People don't have enough money to buy a phone charging system, even if it would save them money in the long term;
Rule 3 - People will use phones more if you provide them with charge, and therefore spend more on airtime;
Rule 4 - People will always try to get a free charge if they can;
Rule 5 - People don't want to perform manual labour to make charge, e.g. a pedal powered charger; this sounds initially attractive, but doesn't work in practice.
Rule 6 - Any system needs to be entrepreneurial and decentralised, to cope with the fragmented nature of the market and network / service providers;
Rule 7 - Any system needs to scale, to be commercially viable;
Rule 8 - Any system has to work in rural off grid areas, because 90% of the population lives outside of cities.

The present solution uses the Mobile Network Operators (MNO) to fund the provision of power to their customers. By providing power, the MNO's customers can use their phone more frequently, consuming more airtime and generating more revenue. A share of this revenue can be used to pay for the provision of power. With this solution the MNO benefits as they sell more airtime and generate increased revenues (assuming the cost of providing power is less than the increased airtime sales), and the customer benefits as they no longer have to pay extortionately high amounts to charge their phone. In addition, local providers of power gain more customers and a new revenue stream

Embodiments of the invention provide the supply of power in rural off grid areas which can reach a wide audience, is decentralised and can be scaled up quickly, for example using a network of local entrepreneurs who sign up to the service and use any third party charging device, e.g. a solar cell kit. Embodiments also provide the means to link the supply of power to increased airtime sales, and the ability to share this revenue amongst the local entrepreneurs, for example via a pay-per-charge model, where the MNO provides a free charge with their airtime voucher, which is redeemed by the local entrepreneur, or by requesting an access code which is released only if the customer has met certain conditions, e.g. topped up their phone, etc. It is also possible to provide a subscription model, where the MNO agrees to provide a share of the increased revenue from a customer who signs up to use the service. A power distributor can monitor the increased airtime usage and provision of power and take a share of the revenues, which in turn funds the local entrepreneurs.

Mobile Network Operators have an interest in ensuring that their customer's phones are charged, so they can use them and in turn sell more 'airtime'. Conversely customers don't seem to mind paying for airtime. In rural Africa people spend an average of $6 per week on airtime. The actual cost of charging the phone is approximately 1 cent (based on a small solar cell costing $20, lasting 5 years that can charge 1 phone per day = 1.1 cents/charge). Therefore the airtime is worth approximately 600 times more than the power required for that phone. The present invention makes use of third party service providers, e.g. MNOs, to pay for the provision of power to their customers, and ensures that this power benefits the service provider.

In general terms, the invention is applicable where an infrastructure provider has a vested interest in ensuring that an electrical device is charged, and the service they are providing is of a greater value than the energy required to charge the device. For example, a Mobile Network Operator (MNO) wants to ensure their customers have a charged phone so that they can continue making calls, sending messages, etc, which in turn generates 'airtime' revenue for the operator. The MNO may wish to make charge available to only their network users, to increase customer acquisition from rivals and can acquire new phone users who were unable to justify buying phones due to unavailability of charge previously. Another example is a company or organisation providing a service to local people is willing to sponsor the power required to consume that service, for example a health organisation wanting to distribute an educational message, by paying for users to charge their devices while watching that message on a video screen. A further example is a company employing people in rural locations to make items that can be resold, e.g. clothes, but requiring power to run sewing machines, etc. to make the items.

The system of the present invention may be implemented in a number of ways as described below.

A further system is in the form of a mobile kiosk, which in essence is an entrepreneur with a mobile version of the 'vending machine'. A local vender is paid to transport the charging station to areas that need to have their phones charged. This is funded by providing the local entrepreneur with a share of the fee that the network operator pays, the more of their customers whose phones the entrepreneur charges the more he earns.

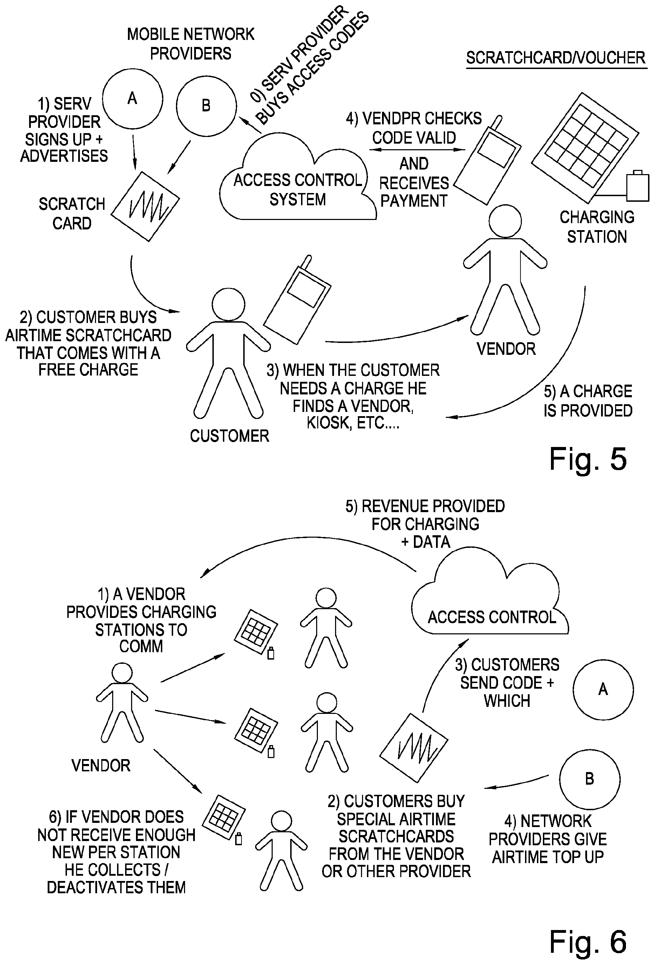

In a yet further system illustrated in Figure 6, an entrepreneur buys solar cells and either 'loans' them for free to local communities or hires them out for an agreed rental rate. The community in return use a code specific to the entrepreneur to register airtime vouchers (or buys special airtime vouchers from him), and some of this money goes to the entrepreneur. If the community does not use the service the entrepreneur takes back the solar cell. The community is free to use the solar cell as they see fit so long as they register their airtime vouchers through him. This means that the system does not require expensive locking features and is highly scalable. Rental fees can be charged by subtracting some money from the airtime each week of the person to whom the solar cell is registered. Alternatively, this airtime charge could be used as an incentive, to be taken if the solar cell customer does not register enough airtime in a particular month. The customer may guarantee keeping hold of their solar cell, if they allow the MNO to take money out of their airtime balance on months when they don't use enough airtime. This allows the villager to balance their use, by sharing the cell with enough neighbours to make sure the monthly use is always high enough.

In an alternative version of this system, the entrepreneur may provide the charge via a stationary (or mobile) charging station under supervision, rather than providing the charging equipment for users to take away, as illustrated in Figure 7. Alternatively, it would be possible to provide locked charging stations, with a simple time or usage monitor that requires periodic activation. The simplest way of doing this would be on a timer that is reset when the local entrepreneur swipes their RFID identifier over the device on a periodic visit, i.e. each month.

The above systems may be used in combination. For example, a stationary charging station may be used to charge smaller batteries which are distributed to groups of end users, e.g. at each village, and used to charge their phones.

In embodiments of the invention, a charging station comprises a source of power, for example: local generation, e.g. solar cells, wind / water turbine, diesel generator, heat etc...; connection to a third party power supply, e.g. a local power generator or the mains grid; storage for example by battery or other means which is topped up periodically; or a combination of both generation and storage, e.g. solar cells with a battery so charge can still be provided at night.

The charging station comprises a power access point that controls access to the power and includes a locking mechanism (physical or software), identification of a device / user, means to receive an access code and means for distributing the power to the device, such as by directly connecting the device to the power via cable, plug and socket (e.g. USB, Firewire, etc), inductive or other means or indirectly distributing the power via exchanging a battery or some other power storage means that can then be transferred / swapped between the charging station and customer without having to bring the two together. The power access point may also be configured to activate a separate power distribution device that may be incorporated into the device being powered, for example the power supply of a sewing machine. The power access point may be automated or be operated and controlled by an operative manually.

A system according to an embodiment of the invention may also comprise a network or service provider where the value of the service they provide is greater than the value of the commodity required to consume that service, for example a telecommunications network selling airtime or a business wanting to provide power to its employees in remote locations so they can use computers, sewing machines, etc. The service provider is willing to pay for their customers to have access to the commodity so the customer may either perform a service of value to the provider, e.g. complete a survey, manufacture goods, etc. or purchase and consume a service from the provider, e.g. airtime.

The system includes means to communicate with the network or service provider, for example a phone call, text message or web service that is accessed by the customer, e.g. via their mobile phone, which may be the device charged itself, e.g. via a phone or computer. A communication system may be incorporated into the access point with an interface that allows the access control point to send or receive messages if automated, or via the vendor's phone if the commodity is manually unlocked. A third party network may also be used to connect to the service provider.

The access control system may be configured to receive access code requests and identify the customer, check the service provider, available subsidy, customer's history and usage of the customer, use an algorithm to determine whether to release an access code, and return an access code to the customer or access point. The device to be charged can be identified via its phone number, which maps to the IMSI. The IMSI can be retrieved by directly scanning the SIM or from an SMS. Another method, for devices with a USB connection is to use the VID / PID data from the USB connection. The algorithm may be based on one or more of airtime used since a given time, airtime per charge, time since last charge, value of credit on phone and cost of charge.

Figure 8 shows a schematic diagram of an embodiment of a charging station. The charging station has energy storage, a Maximum Power Point Tracker (MPPT) that interfaces between the solar cell and the battery, a solar cell, a 12V to 5V converter, output connectors each with an indicator, and a cellular modem. When the cellular modem receives a text message, the system activates a charging port to charge a phone for a given amount of time. Removing the phone will stop the charge. The solar cell continuously tops up the storage battery when possible and this is the power source to charge the phones. The station takes power from the power source, conditions it for maximum power transfer and uses this to charge a storage component, in this example a battery. This is then used to provide power to USB charging ports, via a high efficiency DC-DC converter and control logic. This can be used, for example, to charge a mobile telephone. The input power source could be anything capable of producing low voltage DC, for example a generator, solar cell, fuel cell, mains powered DC power supply or other similar supply. The Maximum Power Point Tracker (MPPT) acts as the interface between the power source and battery, maximising power transfer from the source and handling battery charging profiles. It also distributes the battery power onwards for the rest of the system to use. The DC-DC converter efficiently converts the battery voltage down to the appropriate voltage for USB charging. The GSM modem allows for communication to and from the unit via a cellular network connection. The CPU implements the control logic and functional behaviour of the system. It can respond to SMS requests from the GSM modem, control the output state of each charging port (on or off), read back the output current from each charging port and control an indicator (currently LED, but could be e-ink, electromechanical, LCD, pi-cell or any other) to show the corresponding port's current state. It can also interface with a GPS module (for accurate location or timing data), an expansion port, data storage and configuration modules. Each of these four subsystems is optional (non-core) to the system. Each output stage comprises a USB output receptacle, controlled switch, indicator, current readback circuit and resettable fuse. In an overcurrent situation, this fuse will disconnect the output, resetting after a time once the fault condition is removed.

In summary, a power distribution system for distributing electrical power to battery-powered electrical devices such as mobile telephones is described. Each electrical device is associated with a respective user and each user is a participant in a service (other than the charging of electrical devices) provided by a service provider, such as a mobile network operator. The system comprises a source of electrical power connectable to the electrical device of the user, in order to replenish the battery of that device in response to a requirement from the user for battery charging, an authentication mechanism configured to determine whether the user of the electrical device connected to the power source is a participant in the service, and a payment mechanism for requesting payment from the service provider in respect of the power supplied to electrical devices of users who are participants in the service.

A power distribution system for distributing electrical power to battery-powered electrical devices, in particular mobile telephones, comprises at least one power connector for connection to an electrical device of a user whereby to replenish the battery of that device in response to a requirement from the user for battery charging and a locking mechanism configured selectively to connect the power connector to a source of electrical power only in response to receipt of an authorisation signal. The locking mechanism comprises a receiver configured to receive the authorisation signal from a remote server via a telecommunications network.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A portable power distribution unit for distributing electrical power to battery-powered electrical devices, in particular mobile telephones, in off-grid communities the unit comprising:
an array of power connectors for connection to an electrical device of a user whereby to replenish the battery of that device in response to a requirement from the user for battery charging; wherein the power source comprises a battery,
wherein the power connector is a USB connector;
a visual indicator associated with each power connector; the unit **characterised in that**
a locking mechanism is configured selectively to connect one of said power connectors to a source of electrical power only in response to receipt of an authorisation message, the locking mechanism is configured to illuminate the visual indicator to advise the user which of said power connectors has been enabled, and **in that** the locking mechanism comprises a mobile telecommunications modem configured to receive the authorisation message instructing the locking mechanism to enable said power connector from a remote server via a mobile telecommunications network.

2. A power distribution unit as claimed in claim 1 further comprising a current monitor configured to monitor the current supplied to an electrical device via said enabled power connector.

3. A power distribution unit as claimed in claim 2, wherein the locking mechanism is configured to disconnect the power connector from the source of electrical power in response to a signal from the current monitor indicative of the connection of a further electrical device to the power connector.

4. A power distribution unit as claimed in claim 2 or 3, wherein the locking mechanism is configured to disconnect the power connector from the source of electrical power after a predetermined amount of charge has been provided to the electrical device.

5. A power distribution unit as claimed in any preceding claim, wherein the remote server is configured to receive a request from the user indicating the user's requirement for battery charging and in response to the received request to obtain payment in respect of the battery charging and on confirmation of payment to send the authorisation message to the locking mechanism.

6. A power distribution unit as claimed in claim 5, wherein the request is in the form of an SMS message to a predetermined telephone number.

7. A power distribution unit as claimed in claim 5, wherein the request is in the form of an unanswered call to a predetermined telephone number.

8. A power distribution unit as claimed in claim 6 or 7, wherein the predetermined telephone number selected by the user indicates to the server the particular locking mechanism to which the authorisation signal is to be sent.

9. A power distribution unit as claimed in any preceding claim, wherein the power source comprises a solar panel.

## Patentansprüche

1. Portable Stromverteilungseinheit zur Verwendung von elektrischem Strom an batteriebetriebene elektrische Vorrichtungen, insbesondere Mobiltelefone, in stromnetzunabhängigen Gebieten, folgendes umfassend:
eine Anordnung von Netzanschlusseinrichtungen zur Verbindung mit einer elektrischen Vorrichtung eines Benutzers, um die Batterie der Vorrichtung als Reaktion auf eine Anforderung von dem Benutzer zur Batterieaufladung aufzuladen; wobei die Stromquelle eine Batterie umfasst, wobei die Netzanschlusseinrichtung ein USB-Anschluss ist;
eine Sichtanzeige, die jeder Netzanschlusseinrichtung zugeordnet ist;
wobei die Einheit **dadurch gekennzeichnet ist, dass**
ein Sperrmechanismus so gestaltet ist, dass er selektiv eine der Netzanschlusseinrichtungen mit einer Quelle für elektrischen Strom nur als Reaktion auf den Empfang einer Berechtigungsnachricht verbindet,
wobei der Sperrmechanismus so gestaltet ist, dass er die Sichtanzeige beleuchtet, um dem Benutzer anzuzeigen, welche der Netzanschlusseinrichtungen aktiviert worden ist, und wobei
der Sperrmechanismus ein Mobilfunkmodem umfasst, das so gestaltet ist, dass es die Berechtigungsnachricht empfängt, die den Sperrmechanismus anweist, die Netzanschlusseinrichtung von einem entfernten Server über ein Mobilfunknetz zu aktivieren.

2. Stromverteilungseinheit nach Anspruch 1, wobei diese ferner eine Stromüberwachungsvorrichtung umfasst, die so gestaltet ist, dass sie den an eine elektrische Vorrichtung über die aktivierte Netzanschlusseinrichtung zugeführten Strom überwacht.

3. Stromverteilungseinheit nach Anspruch 2, wobei der Sperrmechanismus so gestaltet ist, dass er als Reaktion auf ein Signal von der Stromüberwachungsvorrichtung, das die Verbindung einer weiteren elektrischen Vorrichtung mit der Netzanschlusseinrichtung, die Netzanschlusseinrichtung von der Quelle für elektrischen Strom trennt.

4. Stromverteilungseinheit nach Anspruch 2 oder 3, wobei der Sperrmechanismus so gestaltet ist, dass die Netzanschlusseinrichtung von der Quelle für elektrischen Strom getrennt wird, nachdem eine vorbestimmte Ladungsmenge an die elektrische Vorrichtung bereitgestellt worden ist.

5. Stromverteilungseinheit nach einem der vorstehenden Ansprüche, wobei der entfernte Server so gestaltet ist, dass er eine Anforderung von dem Benutzer empfängt, welche den Bedarf des Benutzers für ein Laden einer Batterie anzeigt, und dass er als Reaktion auf die empfangene Anforderung eine Zahlung in Bezug auf die Batterieladung erhält, und wobei er bei Zahlungsbestätigung die Berechtigungsnachricht an den Sperrmechanismus sendet.

6. Stromverteilungseinheit nach Anspruch 5, wobei die Anforderung in Form einer SMS-Nachricht an eine vorbestimmte Telefonnummer vorliegt.

7. Stromverteilungseinheit nach Anspruch 5, wobei die Anforderung in Form eines unbeantworteten Anrufs an eine vorbestimmte Telefonnummer vorliegt.

8. Stromverteilungseinheit nach Anspruch 6 oder 7, wobei durch den Benutzer ausgewählte vorbestimmte Telefonnummer dem Server den bestimmten Sperrmechanismus anzeigt, an den das Berechtigungssignal zu senden ist.

9. Stromverteilungseinheit nach einem der vorstehenden Ansprüche, wobei die Stromquelle ein Solarpanel ist.

## Revendications

1. Unité de distribution électrique portative conçue pour distribuer de l'énergie électrique à des dispositifs électriques alimentés par batterie, en particulier des téléphones mobiles, dans des communautés hors réseau, l'unité comprenant :
un ensemble de connecteurs électriques destinés à être connectés à un dispositif électrique d'un utilisateur afin de recharger la batterie de ce dispositif en réponse à une demande de l'utilisateur pour charger la batterie ;
la source d'alimentation comprenant une batterie,
le connecteur électrique étant un connecteur USB ;
un indicateur visuel étant associé à chaque connecteur électrique ;
l'unité étant **caractérisée en ce que**
un mécanisme de verrouillage est conçu pour connecter sélectivement l'un desdits connecteurs électriques à une source d'énergie électrique uniquement en réponse à la réception d'un message d'autorisation,
le mécanisme de verrouillage est conçu pour allumer l'indicateur visuel pour indiquer à l'utilisateur lequel desdits connecteurs électriques a été activé, et **en ce que**
le mécanisme de verrouillage comprend un modem de télécommunications mobiles conçu pour recevoir le message d'autorisation donnant instruction au mécanisme de verrouillage d'activer ledit connecteur électrique depuis un serveur distant via un réseau de télécommunications mobiles.

2. Unité de distribution électrique selon la revendication 1, comprenant en outre un moniteur de courant conçu pour surveiller le courant fourni à un dispositif électrique par l'intermédiaire dudit connecteur électrique activé.

3. Unité de distribution électrique selon la revendication 2, le mécanisme de verrouillage étant conçu pour déconnecter le connecteur électrique de la source d'énergie électrique en réponse à un signal du moniteur de courant indiquant la connexion d'un autre dispositif électrique au connecteur électrique.

4. Unité de distribution électrique selon la revendication 2 ou 3, le mécanisme de verrouillage étant conçu pour déconnecter le connecteur électrique de la source d'énergie électrique après qu'une quantité prédéfinie de charge a été fournie au dispositif électrique.

5. Unité de distribution électrique selon l'une quelconque des revendications précédentes, le serveur distant étant conçu pour recevoir une demande de l'utilisateur indiquant le besoin de l'utilisateur de charger la batterie et en réponse à la demande reçue pour obtenir un paiement concernant la charge de la batterie et sur confirmation du paiement pour envoyer le message d'autorisation au mécanisme de verrouillage.

6. Unité de distribution électrique selon la revendication 5, la demande étant sous la forme d'un message SMS à un numéro de téléphone prédéfini.

7. Unité de distribution électrique selon la revendication 5, la demande étant sous la forme d'un appel sans réponse à un numéro de téléphone prédéfini.

8. Unité de distribution électrique selon la revendication 6 ou 7, le numéro de téléphone prédéfini sélectionné par l'utilisateur indiquant au serveur le mécanisme de verrouillage particulier auquel le signal d'autorisation doit être envoyé.

9. Unité de distribution électrique selon l'une quelconque des revendications précédentes, la source d'énergie comprenant un panneau solaire.
